# EUROPÄISCHE PATENTSCHRIFT

(11) **EP 3 870 623 B1**
(45) Veröffentlichungstag und Bekanntmachung des Hinweises auf die Patenterteilung: **06.12.2023**
(21) Anmeldenummer: 19787296.3
(22) Anmeldetag: 22.10.2019
(51) Int. Cl.: C08G 18/48, C08G 18/65, C08G 18/66, C08G 18/76, C08G 18/20, C08G 18/34

(54) **ISOCYANAT-POLYAMID-BLOCKCOPOLYMER**
ISOCYANATE POLYAMIDE BLOCK COPOLYMER
COPOLYMÈRE SÉQUENCÉ D'ISOCYANATE-POLYAMIDE

(30) Priorität: 23.10.2018 EP 18202049
(43) Veröffentlichungstag der Anmeldung: 01.09.2021
(73) Patentinhaber: BASF SE, 67056 Ludwigshafen am Rhein (DE)
(72) Erfinder: PRISSOK, Frank, 49448 Lemfoerde (DE); PUCH, Florian, 67056 Ludwigshafen am Rhein (DE); POESELT, Elmar, 49448 Lemfoerde (DE)
(74) Vertreter: BASF IP Association
(86) Internationale Anmeldenummer: PCT/EP2019/078708
(87) Internationale Veröffentlichungsnummer: WO 2020/083900

(56) Entgegenhaltungen:
- EP-A2- 0 361 313
- US-A- 4 420 602
- US-A1- 2013 225 708
- Anne C Schuemacher ET AL: "Condensation Between Isocyanates and Carboxylic Acids in the Presence of 4-Dimethylaminopyridine (DMAP), a Mild and Efficient Synthesis of Amides", Synthesis, 31. Dezember 2001 (2001-12-31), Seiten 0243-0246, XP055656666, DOI: 10.1055/s-2001-10813 Gefunden im Internet: URL:https://www.thieme-connect.com/product s/ejournals/pdf/10.1055/s-2001-10813.pdf [gefunden am 2020-01-10]

## Beschreibung

Die vorliegende Erfindung betrifft ein thermoplastisches Polyamid, erhältlich oder erhalten durch Umsetzung mindestens der Komponenten (i), (ii) und (iii): eine Zusammensetzung umfassend eine polymere Verbindung aufweisend zwei Carbonsäuregruppen (i); eine Dicarbonsäurezusammensetzung umfassend mindestens eine Dicarbonsäure (ii); eine Diisocyanatzusammensetzung umfassend mindestens ein Diisocyanat (iii) wobei in der Umsetzung ein Katalysator aufweisend eine Lewisbasekomponenteausgewählt aus der Gruppe bestehend aus N-Methylimidazol, Melamin, Guanidin, Cyanursäure, Dicyandiamid und deren Mischungen, eingesetzt wird, und wobei die polymere Verbindung aufweisend zwei Carbonsäuregruppen mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind. Die Erfindung betrifft weiterhin ein Herstellungsverfahren für das thermoplastische Polyamid und dessen Verwendung.

US 4 420 602 A beschreibt ein Verfahren zur Herstellung eines thermoplastischen Polymers, das durch eine wiederkehrende Amidbindung gekennzeichnet ist. Offenbart wird beispielhaft die Herstellung von thermoplastischen Polyamiden, erhalten durch die Umsetzung von carboxyfunktionellem Hexamethylenadipat oder Tetramethylenazelainat, Azelainsäure und/oder Adipinsäure und 4,4'-Diphenylmethan-diisocyanat in Gegenwart von Additiven und Phospholenoxiden als Katalysator. EP 0 361 313 A2 beschreibt ein Verfahren zur Herstellung einer thermoplastischen Polymermischung durch reaktives Verarbeiten, umfassend mindestens ein erstes thermoplastisches Polymer und ein zweites thermoplastisches Polymer mit wiederkehrenden Imid- und/oder Amidbindungen. Als Katalysatoren werden Phospholenoxide eingesetzt.

Thermoplastische Blockcopolymere wie thermoplastisches Polyurethan (TPU), thermoplastische Polyetherester und Polyesterester (TPEE) sind seit langem bekannt. Sie bauen auf einer harten Phase aus einem oft aromatischen, difunktionellen Baustein, wie einem Diisocyanat oder einer Dicarbonsäure, einem kurzkettigen Diol und einer weichen, elastischen Phase aus einem langkettigen, difunktionellen Polyol auf. Polyamidblockcopolymere (TPA), wie Polyetheramid (z.B. Pebax) bestehen aus einem aliphatischen Polyamidbaustein und einer Polyetherol-Einheit, die meistens mittels Aminendgruppen in das Polymer eingebracht werden. Die Polyetheramide zählen zu den hochpreisigen thermoplastischen Elastomeren und zeigen gegenüber den TPU Vorteile in der Temperaturbeständigkeit und der sogenannten "Schnappigkeit" (spontane Elastizität mit hochdynamischem Rückstellverhalten), sie sind allerdings deutlich teurer und in der Herstellung aufwendig. Es bestand daher der Bedarf nach einem Produkt, das die Eigenschaften von TPU (kontinuierliche Herstellung, hohe Elastizität und Zugfestigkeit) und TPA (gute Temperatur- und Lösungsmittelbeständigkeit, Schnappigkeit) kombiniert und eine weniger aufwendige Synthese ermöglicht und kostengünstig in der Herstellung ist.

Eine Mischform aus Polyurethan (PU) und Polyamid (PA) wird in der EP 2 700 669 A1 beschreiben, die einen plastisch verformbaren Polyurethan-Polyamid-Hartschaumstoff mit einer Geschlossenzelligkeit von kleiner als 70%, sowie ein Verfahren zu dessen Herstellung, in welchem organisches Polyisocyanat mit einer oder mehreren polymeren Verbindungen mit mindestens zwei gegenüber Isocyanaten reaktiven Wasserstoffatomen und einer oder mehreren Carbonsäuren mit einer Funktionalität von mindestens 2, unter Anwendung eines Katalysators zum Polyurethan-Polyamid-Hartschaum umgesetzt werden, betrifft. Als Carbonsäuren werden insbesondere aliphatische Dicarbonsäure mit 2 bis 30 Kohlenstoffatomen eingesetzt, die polymeren Verbindungen mit mindestens zwei gegenüber Isocyanaten reaktiven Wasserstoffatomen sind Polyetherpolyole mit einem Gehalt an Polypropylenoxyd von mindestens 50 Gew.-%, bezogen auf den Gehalt an Alkylenoxyd im Polyalkylenoxidpolyol. Hierbei handelt es sich aber auf ihres Vernetzungsgrades nicht um thermoplastisch verarbeitbare Produkte, die auch keine Blockcopolymere sind.

Des Weiteren sich reine Mischungen aus TPU und PA, wie PA6, PA6.6 oder PA 12 bekannt. Hierbei handelt es sich um Blends die aus Granulatmischungen üblicherweise in einem Extruder oder Kneter hergestellt werden. Abhängig von der eingesetzten Menge der Rohstoffe, zeigen solche mit einem überwiegenden Teil von TPU eher TPU Eigenschaften, solche mit überwiegend PA Polyamid Eigenschaften. Da aber keine chemische Bindung zwischen den Komponenten besteht versagt im Anwendungsfall das schwächste Glied, die Produkte zeigen somit kaum eine Verbesserung der Eigenschaften im Vergleich zum reinen TPU oder PA.

Aufgabe der vorliegenden Erfindung war somit die Bereitstellung eines Herstellungsverfahrens bzw. eines Polymers, mit welchem die oben genannten Nachteile vermieden werden können und welches die Eigenschaften von TPU und TPA kombiniert.

Die Aufgabe wurde gelöst mit einem thermoplastischen Polyamid, erhältlich oder erhalten durch die Umsetzung mindestens der Komponenten (i), (ii) und (iii):
(i) eine Zusammensetzung umfassend eine polymere Verbindung aufweisend zwei Carbonsäuregruppen;
(ii) eine Dicarbonsäurezusammensetzung umfassend mindestens eine Dicarbonsäure;
(iii) eine Diisocyanatzusammensetzung umfassend mindestens ein Diisocyanat,
wobei in der Umsetzung ein Katalysator aufweisend eine Lewisbasekomponente, ausgewählt aus der Gruppe bestehend aus N-Methylimidazol, Melamin, Guanidin, Cyanursäure, Dicyandiamid und deren Mischungen, eingesetzt wird, und wobei die polymere Verbindung aufweisend zwei Carbonsäuregruppen mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind.

Überraschenderweise wurde gefunden, dass sich entsprechend dem Aufbauprinzip des TPU - ein Diisocyanat reagiert mit einem Diol und einem Polyol zu einem Blockcopolymer- aus den Bestandteilen Diisocyanat, kurzkettige Dicarbonsäure und polymere Verbindung aufweisend zwei Carbonsäuregruppen, welche mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind, ein Polymer herstellen lässt, das eine zu TPU identische Struktur besitzt, aber statt der Urethanbindungen Amidbindungen enthält. Das entstehende Kohlenstoffdioxid kann entweder in einer Entgasungszone aus dem Polymer entfernt werden oder direkt als Treibmittel zum Verschäumen benutzt werden. Die Herstellung gelang auf einem kontinuierlich laufenden Extruder, insbesondere einem Tandem-Reaktivextruder, was eine kostengünstige Herstellmethode bedeutet.

In einer Ausführungsform des thermoplastischen Polyamids besteht die Zusammensetzung gemäß (i) zu 95 Gewichts-%, bevorzugt zu 99 Gewichts-%, aus einer oder mehreren polymeren Verbindung aufweisend jeweils zwei Carbonsäuregruppen, welche mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind, bezogen auf das Gesamtgewicht der Zusammensetzung gemäß (i).

In einer Ausführungsform des thermoplastischen Polyamids besteht die Dicarbonsäurezusammensetzung gemäß (ii) zu 95 Gewichts-%, bevorzugt zu 99 Gewichts-% aus einer oder mehreren Dicarbonsäuren und/oder Dicarbonsäureanhydriden, bezogen auf das Gesamtgewicht der Dicarbonsäurezusammensetzung gemäß (ii).

In einer Ausführungsform des thermoplastischen Polyamids besteht die Diisocyanatzusammensetzung gemäß (iii) zu 95 Gewichts-%, bevorzugt zu 99 Gewichts-% aus einem oder mehreren Diisocyanaten, bezogen auf das Gesamtgewicht der Diisocyanatzusammensetzung gemäß (iii).

### Polymere Verbindung aufweisend zwei Carbonsäuregruppen gemäß (i)

In einer Ausführungsform des thermoplastischen Polyamids ist die Zusammensetzung umfassend eine polymere Verbindung aufweisend zwei Carbonsäuregruppen gemäß (i), welche mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind, erhalten oder erhältlich ist durch die Umsetzung der Komponenten (ia) und (ib):
(ia) eine Diolzusammensetzung, umfassend Polytetrahydrofuran (PTHF); und
(ib) eine Dicarbonsäurezusammensetzung, welche mindestens 1,4-Butandisäure (Bernsteinsäure) bzw. Bernsteinsäureanhydrid umfasst;
unter Erhalt einer polymeren Verbindung aufweisend zwei Carbonsäuregruppen, welche mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind.

Das PTHF weist bevorzugt ein zahlenmittleres Molekulargewicht Mn im Bereich von 500 bis 3000 g/mol, weiter bevorzugt im Bereich von 500 bis 1500 g/mol, auf.

Die polymere Verbindung aufweisend zwei Carbonsäuregruppen umfasst mindestens HOOC-(CH₂)ₓCOO-PTHF-OOC-(CH₂)_{y}-COOH, wobei bevorzugt x und y jeweils unabhängig voneinander eine ganze Zahl im Bereich von 1 bis 5, weiter bevorzugt im Bereich 1 bis 3, sind, wobei die polymere Verbindung aufweisend zwei Carbonsäuregruppen weiter bevorzugt mindestens HOOC-(CH₂)₂-COO-PTHF-OOC-(CH₂)₂-COOH umfasst. PTHF weist bevorzugt ein zahlenmittleres Molekulargewicht Mn im Bereich von 500 bis 3000 g/mol, weiter bevorzugt im Bereich von 500 bis 2000 g/mol, auf.

### Dicarbonsäurezusammensetzung gemäß (ii)

Gemäß (ii) wird ebenfalls eine Dicarbonsäurezusammensetzung eingesetzt, wobei die Dicarbonsäurezusammensetzung eine oder mehrere Dicarbonsäuren umfasst. Als Dicarbonsäure sind bevorzugt organischen Dicarbonsäuren mit 2 bis 12 Kohlenstoffatomen, weiter bevorzugt aliphatische Dicarbonsäuren mit 4 bis 6 Kohlenstoffatomen. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden.

In einer Ausführungsform des thermoplastischen Polyamids umfasst die Dicarbonsäurezusammensetzung gemäß (ii) mindestens eine Dicarbonsäure, bevorzugt ausgewählt aus der Gruppe der C2- bis C12-Dicarbonsäuren, weiter bevorzugt aus der Gruppe der C4- bis C8-Dicarbonsäuren, weiter bevorzugt mindestens 1,6-Hexandisäure (Adipinsäure).

### Diisocyanatzusammensetzung gemäß (iii)

Gemäß (iii) wird eine Diisocyanatzusammensetzung eingesetzt. Die Diisocyanatzusammensetzung enthält dabei mindestens ein Diisocyanat. Erfindungsgemäß kann die Diisocyanatzusammensetzung auch zwei oder mehr Diisocyanate enthalten.

Als Diisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluol-diisocyanat, Gemische aus 2,4- und 2,6-Toluol-diisocyanat (TDI), 4,4'-, 2,4'- und/oder 2,2'-Diphenylmethan-diisocyanat (MDI), Gemische aus 2,4'- und 4, 4'-Diphenylmethan-diisocyanat, urethan-, carbodiimid- oder uretonim-modifizierte flüssige 4, 4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-lsocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat.

In einer Ausführungsform des thermoplastischen Polyamids umfasst die Diisocyanatzusammensetzung gemäß (iii) mindestens ein Diisocyanat ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI), und 4,4'-, 2,4'- und 2,2'-Methylendicyclohexyldiisocyanat (H12MDI), Naphthylendiisocyanat NDI, Toluylendiisocyanat (TDI), Tolidindiisocyanat(TODI), Paradiphenyldiisocyanat (PDI), bevorzugt mindestens MDI.

Gemäß einer bevorzugten Ausführungsform werden aromatische Diisocyanate eingesetzt. Durch die Verwendung eines aromatischen Diisocyanats werden teilaromatische Amid-Blockcopolymeren erhalten, die eine weiter verbesserte Temperaturstabilität aufweisen.

Die Disocyanatzusammensetzung gemäß (iii) kann auch in Form eines Prepolymers, bevorzugt eines Prepolymers aufweisend zwei freie Isocyanatgruppen, aus mindestens einem Diisocyanat und mindestens einem Polyol, bevorzugt einem Polyol mit zwei Hydroxyl-Endgruppen, eingesetzt werden.

Durch den Einsatz eines Prepolymers können in einem steuerbaren Verhältnis zusätzlich Urethangruppen in das Blockcopolymer eingebaut werden, womit beispielsweise eine Eigenschaftsanpassung oder ein höheres Molekulargewicht des Polymeren erreicht werden.

Diisocyanatprepolymere sind erhältlich, indem vorstehend beschriebene Diisocyanate im Überschuss, beispielsweise bei Temperaturen von 30 bis 150 °C, bevorzugt bei Temperaturen von 50 bis 120 °C und ganz besonders bevorzugt bei etwa 80 °C, mit Polyolen zum Prepolymer umgesetzt werden. Vorzugsweise werden zur Herstellung der erfindungsgemäßen Prepolymere Diisocyanate und handelsübliche Polyole auf Basis von Polyestern, beispielsweise ausgehend von Adipinsäure, oder Polyethern, beispielsweise ausgehend von Ethylenoxid und/oder Propylenoxid, verwendet, wobei die Polyole bevorzugt zwei endständige OH-Gruppen aufweisen.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind grundsätzlich aus dem Stand der Technik bekannt. Vorzugsweise wird dabei das Verhältnis von organischen Diisocyanaten zu Polyolen und ggf. Kettenverlängerern so gewählt, dass das Isocyanatprepolymer einen NCO-Gehalt von 2 bis 33,5 %, bevorzugt 10 bis 32 %, weiter bevorzugt von 12 bis 30 % und ganz besonders bevorzugt einen NCO-Gehalt von 15 bis 28 % aufweist.

In einer Ausführungsform umfasst die Diisocyanatzusammensetzung gemäß (iii) kein Prepolymer, bevorzugt werden bei der Herstellung des thermoplastischen Polyamids keine Prepolymere in der Umsetzung von (i), (ii) und (iii) eingesetzt.

Bevorzugt werden bei der Herstellung des thermoplastischen Polyamids keine Verbindung mit freien Hydroxylgruppen in der Umsetzung von (i), (ii) und (iii) eingesetzt; weiter bevorzugt umfasst keine der Komponenten (i), (ii) und (iii) freie Hydroxylgruppen; weiter bevorzugt umfasst keine der Komponenten (i), (ii) und (iii) freie Hydroxylgruppen und es werden keine weitere Komponenten eingesetzt, die freie Hydroxylgruppen aufweisen.

Die Komponenten (i), (ii) und (iii) werden bevorzugt in einem molaren Verhältnis von [(i) + (ii)]: (iii) im Bereich von 10:1 bis 1:10, bevorzugt im Bereich von 5:1 bis 1:5, weiter bevorzugt im Bereich von 2:1 bis 1:2, weiter bevorzugt im Bereich von 1.5:1 bis 1 :1.5, weiter bevorzugt im Bereich von 1.2:1 bis 1:1.2, weiter bevorzugt im Bereich von 1.1:1 bis 1:1.1, weiter bevorzugt im molaren Verhältnis [(i) + (ii)] : (iii) von 1:1, eingesetzt. Das molare Verhältnis (i) : (ii) liegt bevorzug im Bereich von 10:1 bis 1:10, bevorzugt im Bereich von 5:1 bis 1:5, weiter bevorzugt im Bereich von 2:1 bis 1:2, weiter bevorzugt im Bereich von 1.5:1 bis 1 :1.5, weiter bevorzugt im Bereich von 1.2:1 bis 1:1.2, weiter bevorzugt im Bereich von 1.1:1 bis 1:1.1, weiter bevorzugt 1:1.

Der in der Umsetzung eingesetzte Katalysator aufweisend eine Lewisbasekomponente umfasst bevorzugt mindestens N-Methylimidazol.

Das Produkt kann in einem nachfolgenden Schritt mit einem Polyisocyanat oder einem Polyepoxid verlängert bzw. vernetzt werden, hierbei wird vorzugsweise mit einem difunktionellen Vernetzer gearbeitet. Kann z.B. auf ein Recycling verzichtet werden, können auch höherfunktionelle Vernetzer eingesetzt werden. Bei NCO-Endgruppen der Polymere werden bevorzugt Epoxide wie Bisphenol-A Derivate oder aliphatische Diepoxid verwendet, bei Säurenedgruppen Diisocyanate wie MDI.

### Verfahren zur Herstellung eines thermoplastischen Polyamids

Die Erfindung betrifft ebenso ein Verfahren zur Herstellung eines thermoplastischen Polyamids, insbesondere eines thermoplastischen Polyamids, umfassend die Umsetzung mindestens der folgenden Komponenten:
(i) eine Zusammensetzung umfassend eine polymere Verbindung aufweisend zwei Carbonsäuregruppen;
(ii) eine Dicarbonsäurezusammensetzung;
(iii) eine Diisocyanatzusammensetzung;
wobei in der Umsetzung ein Katalysator aufweisend eine Lewisbasekomponente, ausgewählt aus der Gruppe bestehend aus N-Methylimidazol, Melamin, Guanidin, Cyanursäure, Dicyandiamid und deren Mischungen, eingesetzt wird, wobei die polymere Verbindung aufweisend zwei

Carbonsäuregruppen mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind.

In einer Ausführungsform des Herstellungsverfahrens für das thermoplastische Polyamid besteht die Zusammensetzung gemäß (i) zu 95 Gewichts-%, bevorzugt zu 99 Gewichts-%, aus einer oder mehreren polymeren Verbindung aufweisend jeweils zwei Carbonsäuregruppen, bezogen auf das Gesamtgewicht der Zusammensetzung gemäß (i).

In einer Ausführungsform des Herstellungsverfahrens für das thermoplastische Polyamid besteht die Dicarbonsäurezusammensetzung gemäß (ii) zu 95 Gewichts-%, bevorzugt zu 99 Gewichts-% aus einer oder mehreren Dicarbonsäuren und/oder Dicarbonsäureanhydriden, bezogen auf das Gesamtgewicht der Dicarbonsäurezusammensetzung gemäß (ii).

In einer Ausführungsform des Herstellungsverfahrens für das thermoplastische Polyamid besteht die Diisocyanatzusammensetzung gemäß (iii) zu 95 Gewichts-%, bevorzugt zu 99 Gewichts-% aus einem oder mehreren Diisocyanaten, bezogen auf das Gesamtgewicht der Diisocyanatzusammensetzung gemäß (iii).

In einer Ausführungsform des Herstellungsverfahrens für das thermoplastische Polyamid ist die Zusammensetzung umfassend eine polymere Verbindung aufweisend zwei Carbonsäuregruppen gemäß (i) erhalten oder erhältlich ist durch die Umsetzung der Komponenten (ia) und (ib):
(ia) eine Diolzusammensetzung, umfassend Polytetrahydrofuran (PTHF); und
(ib) eine Dicarbonsäurezusammensetzung, welche mindestens 1,4-Butandisäure (Bernsteinsäure) bzw. Bernsteinsäureanhydrid umfasst;
unter Erhalt einer polymeren Verbindung aufweisend zwei Carbonsäuregruppen, welche mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind.

Das PTHF weist bevorzugt ein zahlenmittleres Molekulargewicht Mn im Bereich von 500 bis 3000 g/mol, weiter bevorzugt im Bereich von 500 bis 1500 g/mol, auf.

Die polymere Verbindung aufweisend zwei Carbonsäuregruppen umfasst bevorzugt mindestens HOOC-(CH₂)ₓCOO-PTHF-OOC-(CH₂)_{y}-COOH, wobei x und y unabhängig voneinander bevorzugt eine ganze Zahl im Bereich von 1 bis 5, weiter bevorzugt im Bereich 1 bis 3, sind, wobei die polymere Verbindung aufweisend zwei Carbonsäuregruppen weiter bevorzugt mindestens HOOC-(CH₂)₂-COO-PTHF-OOC-(CH₂)₂-COOH umfasst.

Gemäß (ii) wird ebenfalls eine Dicarbonsäurezusammensetzung eingesetzt, wobei Dicarbonsäurezusammensetzung eine oder mehrere Dicarbonsäuren umfasst. Als Dicarbonsäure sind bevorzugt organischen Dicarbonsäuren mit 2 bis 12 Kohlenstoffatomen, weiter bevorzugt aliphatische Dicarbonsäuren mit 4 bis 6 Kohlenstoffatomen. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden.

In einer Ausführungsform des Herstellungsverfahrens für das thermoplastische Polyamid umfasst die Dicarbonsäurezusammensetzung gemäß (ii) mindestens eine Dicarbonsäure, bevorzugt ausgewählt aus der Gruppe der C2- bis C12-Dicarbonsäuren, weiter bevorzugt aus der Gruppe der C4- bis C8-Dicarbonsäuren, weiter bevorzugt mindestens 1,6-Hexandisäure (Adipinsäure.

Gemäß (iii) wird eine Diisocyanatzusammensetzung eingesetzt. Die Diisocyanatzusammensetzung enthält dabei mindestens ein Diisocyanat. Erfindungsgemäß kann die Diisocyanatzusammensetzung auch zwei oder mehr Diisocyanate enthalten. Als Diisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluol-diisocyanat, Gemische aus 2,4- und 2,6-Toluol-diisocyanat (TDI), 4,4'-, 2,4'- und/oder 2,2 '-Diphenylmethan-diisocyanat (MDI), Gemische aus 2,4'- und 4,4'-Diphenylmethan-diisocyanat, urethan-, carbodiimid- oder uretonim-modifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-lsocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat.

In einer Ausführungsform des Herstellungsverfahrens für das thermoplastische Polyamid umfasst die Diisocyanatzusammensetzung gemäß (iii) mindestens ein Diisocyanat ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI), und 4,4'-, 2,4'- und 2,2'-Methylendicyclohexyldiisocyanat (H12MDI), Naphthylen-diisocyanat NDI, Toluylendiisocyanat (TDI), Tolidindiisocyanat(TODI), Paradiphenyldiisocyanat (PDI), bevorzugt mindestens MDI.

Gemäß einer bevorzugten Ausführungsform werden aromatische Diisocyanate eingesetzt. Durch die Verwendung eines aromatischen Diisocyanats werden teilaromatische Amid-Blockcopolymeren erhalten, die eine weiter verbesserte Temperaturstabilität aufweisen.

Die Disocyanatzusammensetzung gemäß (iii) kann auch in Form eines Prepolymers, bevorzugt eines Prepolymers aufweisend zwei freie Isocyanatgruppen, aus mindestens einem Diisocyanat und mindestens einem Polyol, bevorzugt einem Polyol mit zwei Hydroxyl-Endgruppen, eingesetzt werden.

Durch den Einsatz eines Prepolymers können in einem steuerbaren Verhältnis zusätzlich Urethangruppen in das Blockcopolymer eingebaut werden, womit beispielsweise eine Eigenschaftsanpassung oder ein höheres Molekulargewicht des Polymeren erreicht werden.

Diisocyanatprepolymere sind erhältlich, indem vorstehend beschriebene Diisocyanate im Überschuss, beispielsweise bei Temperaturen von 30 bis 150 °C, bevorzugt bei Temperaturen von 50 bis 120 °C und ganz besonders bevorzugt bei etwa 80 °C, mit Polyolen zum Prepolymer umgesetzt werden. Vorzugsweise werden zur Herstellung der erfindungsgemäßen Prepolymere Diisocyanate und handelsübliche Polyole auf Basis von Polyestern, beispielsweise ausgehend von Adipinsäure, oder Polyethern, beispielsweise ausgehend von Ethylenoxid und/oder Propylenoxid, verwendet, wobei die Polyole bevorzugt zwei endständige OH-Gruppen aufweisen.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind grundsätzlich aus dem Stand der Technik bekannt. Vorzugsweise wird dabei das Verhältnis von organischen Diisocyanaten zu Polyolen und ggf. Kettenverlängerern so gewählt, dass das Isocyanatprepolymer einen NCO-Gehalt von 2 bis 33,5 %, bevorzugt 10 bis 32 %, weiter bevorzugt von 12 bis 30 % und ganz besonders bevorzugt einen NCO-Gehalt von 15 bis 28 % aufweist.

In einer Ausführungsform umfasst die Disocyanatzusammensetzung gemäß (iii) kein Prepolymer, bevorzugt werden bei der Herstellung des thermoplastischen Polyamids keine Prepolymere in der Umsetzung von (i), (ii) und (iii) eingesetzt.

Bevorzugt werden bei der Herstellung des thermoplastischen Polyamids keine Verbindung mit freien Hydroxylgruppen in der Umsetzung von (i), (ii) und (iii) eingesetzt; weiter bevorzugt umfasst keine der Komponenten (i), (ii) und (iii) freie Hydroxylgruppen; weiter bevorzugt umfasst keine der Komponenten (i), (ii) und (iii) freie Hydroxylgruppen und es werden keine weitere Komponenten eingesetzt, die freie Hydroxylgruppen aufweisen.

Die Komponenten (i), (ii) und (iii) werden bevorzugt in einem molaren Verhältnis von [(i) + (ii)]: (iii) im Bereich von 10:1 bis 1:10, bevorzugt im Bereich von 5:1 bis 1:5, weiter bevorzugt im Bereich von 2:1 bis 1:2, weiter bevorzugt im Bereich von 1.5:1 bis 1:1.5, weiter bevorzugt im Bereich von 1.2:1 bis 1:1.2, weiter bevorzugt im Bereich von 1.1:1 bis 1:1.1, weiter bevorzugt im molaren Verhältnis [(i) + (ii)] : (iii) von 1:1, eingesetzt. Das molare Verhältnis (i) : (ii) liegt bevorzug im Bereich von 10:1 bis 1:10, bevorzugt im Bereich von 5:1 bis 1:5, weiter bevorzugt im Bereich von 2:1 bis 1:2, weiter bevorzugt im Bereich von 1.5:1 bis 1:1.5, weiter bevorzugt im Bereich von 1.2:1 bis 1:1.2, weiter bevorzugt im Bereich von 1.1:1 bis 1:1.1, weiter bevorzugt 1:1.

In der Umsetzung wird wie oben beschrieben- ein Katalysator aufweisend eine Lewisbasekomponente ausgewählt aus der Gruppe bestehend aus N-Methylimidazol, Melamin, Guanidin, Cyanursäure, Dicyandiamid und deren Mischungen, bevorzugt mindestens N-Methylimidazol, eingesetzt.

In einer Ausführungsform des Herstellungsverfahrens für das thermoplastische Polyamid werden die Komponenten (i) und (ii) in Kontakt gebracht und anschließen wird die Komponente (iii) zugegeben.

In einer Ausführungsform des Herstellungsverfahrens für das thermoplastische Polyamid erfolgt die Umsetzung der Komponenten (i), (ii) und (iii) in einer Reaktivextruder-Vorrichtung umfassend mindestens zwei, vorzugsweise zusammengeschaltete, Extruder, bevorzugt in einem Tandem-Reaktivextruder.

In einer Ausführungsform des Herstellungsverfahrens für das thermoplastische Polyamid wird das bei der Umsetzung entstehende Kohlenstoffdioxid abgeführt, unter Erhalt eines nicht-verschäumten Polyamids oder das bei der Umsetzung entstehende Kohlenstoffdioxid wird als Treibmittel in der Verschäumung eingesetzt unter Erhalt eines verschäumten Polyamids.

Eine Ausführungsform des Herstellungsverfahrens für das thermoplastische Polyamid umfasst die Umsetzung mindestens der folgenden Komponenten:
(i) eine Polyester- oder Polyetherdicarbonsäure-Zusammensetzung umfassend mindestens HOOC-(CH₂)ₓCOO-PTHF-OOC-(CH₂)_{y}-COOH, wobei x und y unabhängig voneinander eine ganze Zahl im Bereich von 1 bis 10, bevorzugt im Bereich von 1 bis 5, weiter bevorzugt im Bereich 1 bis 3, sind, weiter bevorzugt mindestens HOOC-(CH₂)₂-COO-PTHF-OOC-(CH₂)₂-COOH;
(ii) eine Dicarbonsäurezusammensetzung umfassend mindestens Adipinsäure;
(iii) eine Diisocyanatzusammensetzung umfassend mindestens MDI,
wobei in der Umsetzung ein Katalysator aufweisend eine Lewisbasekomponente, ausgewählt aus der Gruppe bestehend aus N-Methylimidazol, Melamin, Guanidin, Cyanursäure, Dicyandiamid und deren Mischungen, eingesetzt wird.

Das Produkt kann in einem nachfolgenden Schritt mit einem Polyisocyanat oder einem Polyepoxid verlängert bzw. vernetzt werden, hierbei wird vorzugsweise mit einem difunktionellen Vernetzer gearbeitet. Kann z.B. auf ein Recycling verzichtet werden, können auch höherfunktionelle Vernetzer eingesetzt werden. Bei NCO-Endgruppen der Polymere werden bevorzugt Epoxide wie Bisphenol-A Derivate oder aliphatische Diepoxid verwendet, bei Säurenedgruppen Diisocyanate wie MDI.

Die Erfindung betrifft weiterhin ein thermoplastisches Polyamid, erhalten oder erhältlich nach dem vorangehend beschriebenen Verfahren.

Weiterhin betrifft die Erfindung die Verwendung eines thermoplastischen Polyamids wie voranstehend beschrieben oder eines thermoplastischen Polyamids erhalten oder wie voranstehend beschrieben zur Herstellung eines Formkörpers, eines Spritzgussprodukts, eines Extrusionsprodukts, einer Folie, eines Extrusionsschaums oder eines Schaumstoffartikels.

Weiterhin betrifft die Erfindung die Verwendung eines thermoplastischen Polyamids wie voranstehend beschrieben oder eines thermoplastischen Polyamids erhältlich oder erhalten nach einem Verfahren wie voranstehend beschrieben für einen Artikel ausgewählt aus der Gruppe von Schlauch, insbesondere Druckschlauch, und Kabelummantelung.

Weiterhin betrifft die Erfindung die Verwendung eines Schaumstoffartikel erhalten oder erhältlich aus einem thermoplastischen Polyamid wie voranstehend beschrieben oder eines thermoplastischen Polyamids erhältlich oder erhalten nach einem Verfahren wie voranstehend beschrieben für einen Artikel ausgewählt aus der Gruppe bestehend aus Schuhsohle; Bestandteil einer Schuhsohle, insbesondere Schuhzwischensohle; Sportgerät, insbesondere Ball; und Dämpfungselement, insbesondere Dämpfungselement für eine Maschine oder für ein Automobil.

Im Rahmen der Herstellung des thermoplastischen Polyamids wird ein Tandem-Reaktivextruder eingesetzt, welcher nicht Gegenstand der vorliegenden Erfindung ist. Der Tandem-Reaktivextruder umfasst
1) einen ersten Zonen-aufweisenden temperatur-kontrollierbaren Extruder (Extruder 1), wobei der Extruder 1 mindestens eine Extruderschnecke, einen Mantel, in welchem sich die mindestens eine Extruderschnecke erstreckt, und mindestens zwei Zonen umfassend eine erste Zone, eine der ersten Zone nachgelagerte zweite Zone, und einen Auslass in der zweiten Zone, aufweist; und
2) einen zweiten Zonen-aufweisenden temperatur-kontrollierbaren Extruder (Extruder 2), wobei der Extruder 2 mindestens eine Extruderschnecke, einen Mantel, in welchem sich die mindestens eine Extruderschnecke erstreckt, und mindestens drei Zonen umfassend eine erste Zone, eine der ersten Zone nachgelagerte zweite Zone, eine der zweiten Zone nachgelagerte dritte Zone, und einen Einlass in der dritten Zone, sowie einen der dritten Zone nachgelagerten Extruderdüsenkopf, aufweist; wobei der Einlass in der dritten Zone des zweiten Extruders 2 mit dem Auslass in der zweiten Zone des ersten Extruders 1 verbunden ist.

Der Ausdruck "erste Zone" umfasst auch Aufbauten, bei denen es mindestens eine weitere zusätzliche Zone vor- und/oder nachgelagert zur ersten Zone gibt, wobei nachgelagert zur ersten Zone gleichzeitig vorgelagert zur zweiten Zone bedeutet. Das gleiche gilt ebenfalls für die jeweilige zweite Zone, d.h. der Ausdruck "zweite Zone" umfasst auch Aufbauten, bei denen es mindestens eine weitere zusätzliche Zone vor- und/oder nachgelagert zur zweiten Zone gibt, wobei vorgelagert zur zweiten Zone gleichzeitig nachgelagert zur ersten Zone und nachgelagert zur zweiten Zone gleichzeitig vorgelagert zur dritten Zone bedeutet. Das gleiche gilt ebenfalls für die dritte Zone, d.h. der Ausdruck "dritte Zone" umfasst auch Aufbauten, bei denen es mindestens eine weitere zusätzliche Zone vor- und/oder nachgelagert zur dritten Zone gibt.

In einer Variante des eingesetzten, nicht erfindungsgemäßen, Tandem-Reaktivextruders umfasst der erste Extruder 1 nachgelagert zur ersten Zone und vorgelagert zur zweiten Zone mindestens eine weitere Zone.

Der Einlass in der dritten Zone des zweiten Extruders 2 ist mit dem Auslass in der zweiten Zone des ersten Extruders 1 verbunden. In einer Variante des eingesetzten, nicht erfindungsgemäßen, Tandem-Reaktivextruders ist die Verbindung von Einlass in der dritten Zone des zweiten Extruders 2 und Auslass in der zweiten Zone des ersten Extruders 1 derart ausgestaltet ist, dass ein Stoffübergang vom ersten in die dritte Zone des zweiten Extruders erfolgen kann.

In einer Variante des eingesetzten, nicht erfindungsgemäßen, Tandem-Reaktivextruders umfasst der erste Extruder Einlassöffnungen in der ersten und der zweiten Zone.

In einer Variante des eingesetzten, nicht erfindungsgemäßen, Tandem-Reaktivextruders umfasst der zweite Extruder Einlassöffnungen zumindest in der ersten und der zweiten Zone.

Gegebenenfalls vorhandene vor- bzw. nachgelagerte weitere Zonen weisen optional Einlassöffnungen und/oder Auslassöffnungen auf, durch welche Materialien zugegeben oder entnommen werden können.

Bevorzugt sind zumindest die jeweiligen ersten und zweiten Zonen, sowie die dritte Zone temperaturkontrollierbar, weiter bevorzugt sind die jeweiligen ersten und zweiten Zonen und die dritte Zone, sowie gegebenenfalls vorhandene vor- bzw. nachgelagerte weitere Zonen temperaturkontrollierbar.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Chemikalien

| Bezeichnung | Chemische Bezeichnung |
|---|---|
| Polyisocyanat | 4,4'-Diphenylmethan-diisocyanat (4,4'-MDI) |
| Polycarbonsäure | Adipinsäure |
| Antischaummittel | Siliconentschäumer (100% Siliconentschäumer von Momentive) |
| Katalysator | N-Methylimidazol |
| Säureanhydrid | Bernsteinsäureanhydrid |
| Poyol | Polytetramethylenetherglykol (PTHF) mit einer OH-Zahl im Bereich von 109,5-115,1 mg K0H/g |

### 2. Tandem-Reaktivextruder

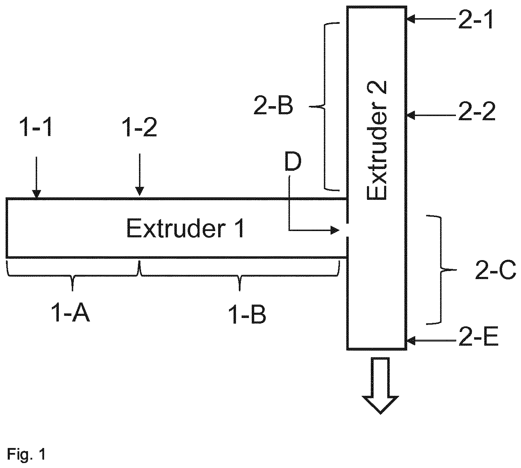

Reaktivextruder mit Tandemaufbau zweier Extruder, wobei jeder Extruder mehrere, separat Temperatur-kontrollierbare, Zonen aufweist (Tandem-Reaktivextruder). Der Tandem-Raktivextruder umfasst einen ersten Zonen-aufweisenden, temperatur-kontrollierbaren Extruder (Extruder 1), welcher eine Extruderschnecke, einen Mantel, in welchem sich die mindestens eine Extruderschnecke erstreckt, und mindestens zwei Zonen umfassend eine erste Zone, eine der ersten Zone nachgelagerte zweite Zone, und einen Auslass in der zweiten Zone, aufweist; und einen zweiten Zonen-aufweisenden temperatur-kontrollierbaren Extruder (Extruder 2), wobei der Extruder 2 eine Extruderschnecke, einen Mantel, in welchem sich die eine Extruderschnecke erstreckt, und mindestens drei Zonen umfassend eine erste Zone, eine der ersten Zone nachgelagerte zweite Zone, eine der zweiten Zone nachgelagerte dritte Zone, und einen Einlass in der dritten Zone, sowie einen der dritten Zone nachgelagerten Extruderdüsenkopf, aufweist; wobei der Einlass in der dritten Zone des zweiten Extruders 2 mit dem Auslass in der zweiten Zone des ersten Extruders 1 verbunden ist. Der erste Extruder weist Einlassöffnungen in der ersten und der zweiten Zone auf, durch welche Stoffe zugegeben werden (können). Der zweite Extruder weist ebenfalls Einlassöffnungen zumindest in der ersten und der zweiten Zone auf, durch Stoffe zugegeben werden (können). Durch die Verbindung von Einlass in der dritten Zone des zweiten Extruders 2 und Auslass in der zweiten Zone des ersten Extruders 1 kann das in der zweiten Zone des ersten Extruders 1 erhaltene Stoff(gemisch) in die dritte Zone des zweiten Extruders 2 übertreten, wo es mit dem in der zweiten und/oder drtten Zone erhaltenen Stoff(gemisch) aus dem zweiten Extruder 2 in Kontakt kommt, vorzugsweise dort vermischt wird. Der schematische Aufbau eines Tandem-Reaktivextruders ist in Figur 1 gezeigt.

### 3. Beispiele

### 3.1 Synthese der polymeren Verbindung aufweisend zwei Carbonsäuregruppen

Eine polymere Verbindung aufweisend zwei Carbonsäuregruppen, hier HOOC-(CH₂)₂-COO-PTHF-OOC-(CH₂)₂-COOH, wurde hergestellt durch Umsetzung des Polyols mit Bernsteinsäureanhydrid. Hierzu wurden in einem 20 Liter Kessel mit Rückflußkühler unter Stickstoffatmosphäre 8 kg Polytertahydrofuran mit einem Molekulargewicht Mw von 1000 g/mol vorgelegt und unter Rühren auf 130 °C erwärmt. Eine doppeltmolare Menge (1602 g) an festem Bernsteinsäureanhydrid (Mw von 100,07 g/mol) wurde in den Reaktionskessel gegeben. Das Bernsteinsäureanhydrid schmolz in dem PTHF auf, der Kesselinhalt wurde anschließend auf 200 °C erwärmt und unter Rühren mindestens 1 Stunde auf dieser Temperatur gehalten. Das Bernsteinsäureanhydrid reagierte mit den freien OH-Gruppen des PTHF unter Ringöffnung und Bildung von Esterbindungen. Das Reaktionsgemisch wurde anschließend abgekühlt in ein Metallgebinde gefüllt.

### 3.2 Synthese thermoplastisches Polyamid

Die Proben wurden folgendermaßen mit zwei Extrudern im Tandemaufbau (Tandem-Reaktivextruder) hergestellt: Die Adipinsäure wurde im ersten Extruder 1 in der ersten Zone zugegeben (hier: Zone 1, Bereich Heizelement 1 des Extruders 1) und aufgeschmolzen und mit dem HOOC-(CH₂)₂-COO-PTHFOOC-(CH₂)₂-COOH aus 3.1 in einer zweiten Zone (hier: Zone 3 des ersten Extruders für Probe 1 und Probe 3, Zugabe des HOOC-(CH₂)₂-COO-PTHFOOC-(CH₂)₂-COOH im Bereich Heizelement 5 des Extruders 1) vermischt. Entschäumer und Katalysator wurden in der ersten Zone (Zone 1) des zweiten Extruders zugegeben (Bereich Heizelement 1 des Extruders 2), das MDI wurde für Probe 1 und Probe 3 in der zweiten Zone (hier: Zone 2) des zweiten Extruders zugegeben (Bereich Heizelement 2 des Extruders 2). Für Probe 7 wurde das MDI bereits in der ersten Zone (hier: Zone 1) des ersten Extruders zugeben, die Rezeptur war analog zu Probe 3. Der Durchsatz war immer ~10 kg/h und die Extruderdrehzahl beider Extruder betrug 200 U/min. Die jeweiligen Rezepturen sind in Tabelle 1 wiedergegeben.

**Tabelle 1**

| Rezepturen der Proben 1, 2, 3 und 7. | | | | |
|---|---|---|---|---|
| Material | 1 | 2 | 3 | 7 |
| Polycarbonsäure | 0,737 kg/h | 0,737 kg/h | 0,737 kg/h | 0,737 kg/h |

| Material | 1 | 2 | 3 | 7 |
|---|---|---|---|---|
| HOOC-(CH₂)₂-COO-PTHFOOC-(CH₂)₂-COOH | 6,567 kg/h | 6,567 kg/h | 6,567 kg/h | 6,567 kg/h |
| Polyisocyanat | 2,617 kg/h | 2,50 kg/h | 2,617 kg/h | 2,617 kg/h |
| Katalysator | 0,05 kg/h | 0,05 kg/h | 0,10 kg/h | 0,10 kg/h |
| Antischaummittel | 0,02 kg/h | 0,02 kg/h | 0,02 kg/h | 0,02 kg/h |

Das Temperaturprofil des ersten und zweiten Extruders (Extruder 1, Extruder 2) ist in Tabelle 2 wiedergegeben.

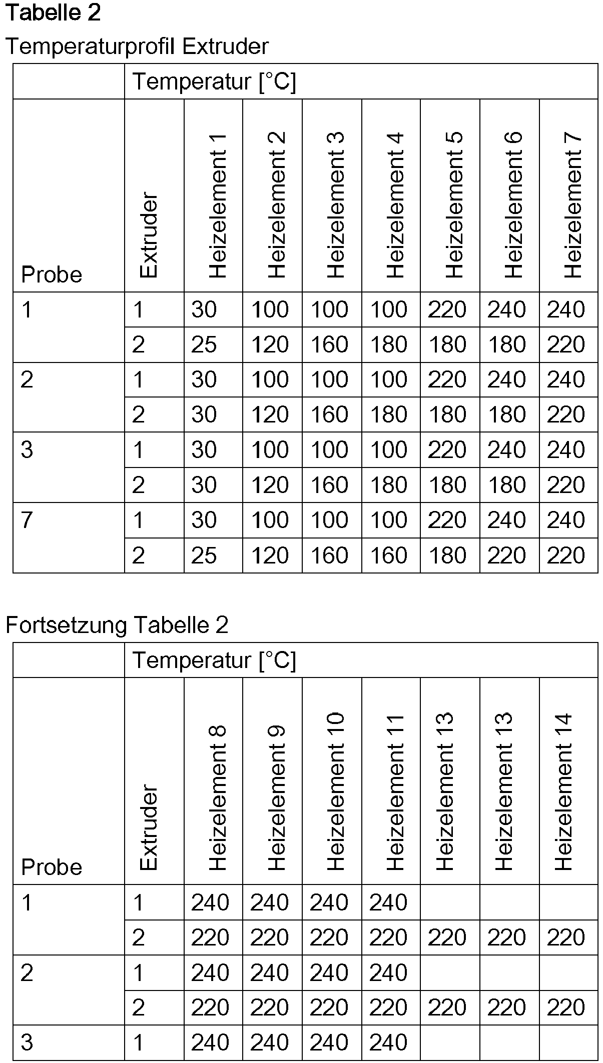

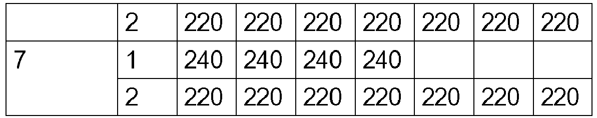

Die Proben wurden mit GPC und IR-Spektroskopie untersucht. Die GPC-Daten zeigen, dass ausreichende Molekulargewichte erzielt wurden und demzufolge Polymer erhalten wurden. Tabelle 3 zeigt die Molekulargewichte für die Proben 1, 2, 3 und 7. Gemäß IR-Spektren sind für alle vier Proben deutlich Amidstrukturen zu erkennen.

**Tabelle 3**

| gewichtsmittleres und zahlenmittleres Molekulargewicht | |
|---|---|
| Probe | Mw [g/mol] |
| 1 | 12 700 |
| 2 | 16 300 |
| 3 | 9 370 |
| 7 | 38 100 |

### Beschreibung der Figur

**Fig. 1** zeigt einen Reaktivextruder mit Tandemaufbau zweier Extruder, wobei jeder Extruder mehrere, separat Temperatur-kontrollierbare, Heizelemente aufweist (Tandem-Reaktivextruder). Der Tandem-Raktivextruder umfasst einen ersten Zonen-aufweisenden, temperatur-kontrollierbaren Extruder (Extruder 1), welcher eine Extruderschnecke (nicht gezeigt), einen Mantel, in welchem sich die mindestens eine Extruderschnecke erstreckt, und mindestens zwei Zonen umfassend eine erste Zone (1-1), eine der ersten Zone nachgelagerte zweite Zone (1-2), und einen Auslass in der zweiten Zone, aufweist; und einen zweiten Zonen-aufweisenden temperatur-kontrollierbaren Extruder (Extruder 2), wobei der Extruder 2 eine Extruderschnecke (nicht gezeigt), einen Mantel, in welchem sich die eine Extruderschnecke erstreckt, und mindestens drei Zonen umfassend eine erste Zone (2-1), eine der ersten Zone nachgelagerte zweite Zone (2-2), eine der zweiten Zone nachgelagerte dritte Zone (2-3), und einen Einlass in der dritten Zone, sowie einen der dritten Zone nachgelagerten Extruderdüsenkopf (2-E), aufweist; wobei der Einlass in der dritten Zone des zweiten Extruders 2 mit dem Auslass in der zweiten Zone des ersten Extruders 1 verbunden ist (D). Der erste Extruder weist Einlassöffnungen in der ersten und der zweiten Zone auf, durch welche Stoffe zugegeben werden (können). Der zweite Extruder weist ebenfalls Einlassöffnungen zumindest in der ersten und der zweiten Zone auf, durch Stoffe zugegeben werden (können). Durch die Verbindung von Einlass in der dritten Zone des zweiten Extruders 2 und Auslass in der zweiten Zone des ersten Extruders 1 kann das in der zweiten Zone des ersten Extruders 1 (1-2) erhaltene Stoff(gemisch) in die dritte Zone des zweiten Extruders 2 (2-3) übertreten, wo es mit dem in der zweiten und/oder drtten Zone erhaltenen Stoff(gemisch) aus dem zweiten Extruder 2 in Kontakt kommt, vorzugsweise dort vermischt wird. Gezeigt ist für den ersten Extruder 1 weiterhin eine weitere, der ersten Zone nach- und der zweiten Zone vorgelagerte Zone (X), wobei erste Zone (1-1) und Zone (X) eine Aufschmelzone (1-A) darstellen. Der weitere Teil des Extruders 1 ab (1-2) stellt die erste Vermischungszone (1-B) dar. Im zweiten Extruder ist eine Vermischungszone (2-B) gezeigt, weiterhin ist ab dem Einlass bzw. ab der Verbindung zwischen Auslass des ersten und Einlass des zweiten Extruders (D) eine Reaktionszone (2-C) gezeigt. Über den Extruderdüsenkopf (2-E) des zweiten Extruders 2 erfolgt der Austrag, d.h. die Extrusion, des erhaltenen thermoplastischen Polyamids.

### Angeführte Literatur

- EP 2 700 669 A1
- Kunststoffhandbuch, Band 7, Polyurethane", Carl Hanser Verlag, 3. Auflage 1993, Kapitel 3
- US 4 420 602 A
- EP 0 361 313 A2

## Patentansprüche

1. Thermoplastisches Polyamid, erhältlich oder erhalten durch die Umsetzung mindestens der Komponenten (i), (ii) und (iii):
(i) eine Zusammensetzung umfassend eine polymere Verbindung aufweisend zwei Carbonsäuregruppen;
(ii) eine Dicarbonsäurezusammensetzung umfassend mindestens eine Dicarbonsäure;
(iii) eine Diisocyanatzusammensetzung umfassend mindestens ein Diisocyanat,
wobei in der Umsetzung ein Katalysator aufweisend eine Lewisbasekomponente, ausgewählt aus der Gruppe bestehend aus N-Methylimidazol, Melamin, Guanidin, Cyanursäure, Dicyandiamid und deren Mischungen, eingesetzt wird, wobei die polymere Verbindung aufweisend zwei Carbonsäuregruppen mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind.

2. Thermoplastisches Polyamid nach Anspruch 1, wobei das Polytetrahydrofuran (PTHF) ein zahlenmittleres Molekulargewicht Mn im Bereich von 500 bis 3000 g/mol, bevorzugt im Bereich von 500 bis 2000 g/mol, aufweist, wobei die polymere Verbindung aufweisend zwei Carbonsäuregruppen bevorzugt mindestens HOOC-(CH₂)ₓCOO-PTHF-OOC-(CH₂)_{y}-COOH umfasst, wobei x und y unabhängig voneinander eine ganze Zahl im Bereich von 1 bis 5, bevorzugt im Bereich 1 bis 3, sind, wobei die polymere Verbindung aufweisend zwei Carbonsäuregruppen weiter bevorzugt mindestens HOOC-(CH₂)₂-COO-PTHF-OOC-(CH₂)₂-COOH umfasst.

3. Thermoplastisches Polyamid nach Anspruch 1 oder 2, wobei die Dicarbonsäurezusammensetzung gemäß (ii) mindestens eine Dicarbonsäure, bevorzugt ausgewählt aus der Gruppe der C2- bis C12-Dicarbonsäuren, weiter bevorzugt aus der Gruppe der C4- bis C8-Dicarbonsäuren, weiter bevorzugt mindestens 1,6-Hexandisäure (Adipinsäure), umfasst.

4. Thermoplastisches Polyamid nach einem der Ansprüche 1 bis 3, wobei die Diisocyanatzusammensetzung gemäß (iii) mindestens ein Diisocyanat ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI), und 4,4'-, 2,4'- und 2,2'-Methylendicyclohexyldiisocyanat (H12MDI), Naphthylendiisocyanat NDI, Toluylendiisocyanat (TDI), Tolidindiisocyanat(TODI), Paradiphenyldiisocyanat (PDI), bevorzugt mindestens MDI, enthält.

5. Thermoplastisches Polyamid nach einem der Ansprüche 1 bis 4, wobei keine Verbindung mit freien Hydroxylgruppen in der Umsetzung von (i), (ii) und (iii) eingesetzt wird; bevorzugt umfasst keine der Komponenten (i), (ii) und (iii) freie Hydroxylgruppen; weiter bevorzugt umfasst keine der Komponenten (i), (ii) und (iii) freie Hydroxylgruppen und es werden keine weitere Komponenten eingesetzt, die freie Hydroxylgruppen aufweisen.

6. Thermoplastisches Polyamid nach einem der Ansprüche 1 bis 5 erhältlich oder erhalten durch die Umsetzung mindestens der Komponenten (i), (ii) und (iii):
(i) eine Diisocyanatzusammensetzung umfassend mindestens MDI;
(ii) eine Polyester- oder Polyetherdicarbonsäure-Zusammensetzung umfassend mindestens HOOC-(CH₂)ₓCOO-PTHF-OOC-(CH₂)_{y}-COOH, wobei x und y unabhängig voneinander eine ganze Zahl im Bereich von 1 bis 10, bevorzugt im Bereich von 1 bis 5, weiter bevorzugt im Bereich 1 bis 3, sind, weiter bevorzugt mindestens HOOC-(CH₂)₂-COO-PTH F-OOC-(CH₂)₂-COOH;
(iii) eine Dicarbonsäurezusammensetzung umfassend mindestens Adipinsäure.

7. Verfahren zur Herstellung eines thermoplastischen Polyamids umfassend die Umsetzung mindestens der folgenden Komponenten:
(i) eine Zusammensetzung umfassend eine polymere Verbindung aufweisend zwei Carbonsäuregruppen;
(ii) eine Dicarbonsäurezusammensetzung;
(iii) eine Diisocyanatzusammensetzung,
wobei in der Umsetzung ein Katalysator aufweisend eine Lewisbasekomponente, ausgewählt aus der Gruppe bestehend aus N-Methylimidazol, Melamin, Guanidin, Cyanursäure, Dicyandiamid und deren Mischungen, eingesetzt wird, wobei die polymere Verbindung aufweisend zwei Carbonsäuregruppen mindestens HOOC-(CH₂)ₓCOO-PTHF-OOC-(CH₂)_{y}-COOH umfasst, wobei x und y unabhängig voneinander eine ganze Zahl im Bereich von 1 bis 10 sind.

8. Verfahren nach Anspruch 7, wobei das PTHF ein zahlenmittleres Molekulargewicht Mn im Bereich von 500 bis 3000 g/mol, bevorzugt im Bereich von 500 bis 2000 g/mol, aufweist, wobei die polymere Verbindung aufweisend zwei Carbonsäuregruppen bevorzugt mindestens HOOC-(CH₂)ₓCOO-PTHF-OOC-(CH₂)_{y}-COOH umfasst, wobei x und y unabhängig voneinander eine ganze Zahl im Bereich von 1 bis 5, bevorzugt im Bereich 1 bis 3, sind, wobei die polymere Verbindung aufweisend zwei Carbonsäuregruppen bevorzugt mindestens HOOC-(CH₂)₂-COO-PTHF-OOC-(CH₂)₂-COOH umfasst;
und/oder
die Dicarbonsäurezusammensetzung gemäß (ii) mindestens eine Dicarbonsäure, bevorzugt ausgewählt aus der Gruppe der C2- bis C12-Dicarbonsäuren, weiter bevorzugt aus der Gruppe der C4- bis C8-Dicarbonsäuren, weiter bevorzugt mindestens 1,6-Hexandisäure (Adipinsäure), umfasst;
und/oder
die Diisocyanatzusammensetzung gemäß (iii) mindestens ein Diisocyanat ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI), und 4,4'-, 2,4'- und 2,2'-Methylendicyclohexyldiisocyanat (H12MDI), Naphthylendiisocyanat NDI, Toluylendiisocyanat (TDI), Tolidindiisocyanat(TODI), Paradiphenyldiisocyanat (PDI), bevorzugt mindestens MDI, enthält.

9. Verfahren nach Anspruch 7 oder 8, wobei keine Verbindung mit freien Hydroxylgruppen in der Umsetzung von (i), (ii) und (iii) eingesetzt wird; bevorzugt umfasst keine der Komponenten (i), (ii) und (iii) freie Hydroxylgruppen; weiter bevorzugt umfasst keine der Komponenten (i), (ii) und (iii) freie Hydroxylgruppen und es werden keine weitere Komponenten eingesetzt, die freie Hydroxylgruppen aufweisen.

10. Verfahren nach einem der Ansprüche 7 bis 9, wobei die Umsetzung der Komponenten (i),
(ii) und (iii) in einer Reaktivextruder-Vorrichtung umfassend mindestens zwei, vorzugsweise zusammen-geschaltete, Extruder, weiter bevorzugt in einem Tandem-Reaktivextruder, erfolgt.

11. Thermoplastisches Polyamid, erhalten oder erhältlich nach dem Verfahren nach Anspruch 10.

12. Verwendung eines thermoplastischen Polyamids nach einem der Ansprüche 1 bis 6 oder eines thermoplastischen Polyamids erhalten oder erhältlich nach dem Verfahren nach einem der Ansprüche 7 bis 10 zur Herstellung eines Formkörpers, eines Spritzgussprodukts, eines Extrusionsprodukts, einer Folie, eines Extrusionsschaums oder eines Schaumstoffartikels; bevorzugt
für einen Artikel ausgewählt aus der Gruppe von Schlauch, insbesondere Druckschlauch, und Kabelummantelung; oder
für einen Artikel ausgewählt aus der Gruppe bestehend aus Schuhsohle; Bestandteil einer Schuhsohle, insbesondere Schuhzwischensohle; Sportgerät, insbesondere Ball; und Dämpfungselement, insbesondere Dämpfungselement für eine Maschine oder für ein Automobil.

## Claims

1. A thermoplastic polyamide obtainable or obtained through the reaction of at least the components (i), (ii), and (iii):
(i) a composition comprising a polymeric compound having two carboxylic acid moieties;
(ii) a dicarboxylic acid composition comprising at least one dicarboxylic acid;
(iii) a diisocyanate composition comprising at least one diisocyanate,
wherein a catalyst having a Lewis base component, selected from the group consisting of N-methylimidazole, melamine, guanidine, cyanuric acid, dicyandiamide, and mixtures thereof, is used in the reaction, wherein the polymeric compound having two carboxylic acid moieties comprises at least HOOC-(CH₂)ₓCOO-PTHF-OOC-(CH₂)_{y}-COOH, where x and y are independently an integer in the range from 1 to 10.

2. The thermoplastic polyamide according to claim 1, wherein the polytetrahydrofuran (PTHF) has a number-average molecular weight Mn in the range from 500 to 3000 g/mol, preferably in the range from 500 to 2000 g/mol, wherein the polymeric compound having two carboxylic acid moieties comprises preferably at least HOOC-(CH₂)ₓCOO-PTHF-OOC-(CH₂)_{y}-COOH, where x and y are independently an integer in the range from 1 to 5, preferably in the range 1 to 3, with the polymeric compound having two carboxylic acid moieties further preferably comprising at least HOOC-(CH₂)₂-COO-PTHF-OOC-(CH₂)₂-COOH.

3. The thermoplastic polyamide according to claim 1 or 2, wherein the dicarboxylic acid composition in accordance with (ii) comprises at least one dicarboxylic acid, preferably selected from the group of C2 to C12 dicarboxylic acids, further preferably from the group of C4 to C8 dicarboxylic acids, further preferably at least 1,6-hexanedioic acid (adipic acid).

4. The thermoplastic polyamide according to any of claims 1 to 3, wherein the diisocyanate composition in accordance with (iii) comprises at least one diisocyanate selected from the group consisting of 2,2'-diphenylmethane diisocyanate (2,2'-MDI), 2,4'-diphenylmethane diisocyanate (2,4'-MDI), 4,4'-diphenylmethane diisocyanate (4,4'-MDI), hexamethylene 1,6-diisocyanate (HDI), and 4,4'-, 2,4'-, and 2,2'-methylenedicyclohexyl diisocyanate (H12MDI), naphthylene diisocyanate NDI, tolylene diisocyanate (TDI), tolidine diisocyanate (TODI), para-diphenyl diisocyanate (PDI), preferably at least MDI.

5. The thermoplastic polyamide according to any of claims 1 to 4, wherein no compound having free hydroxyl groups is used in the reaction of (i), (ii), and (iii); preferably none of components (i), (ii), and (iii) contains free hydroxyl groups; further preferably none of components (i), (ii), and (iii) contains free hydroxyl groups and no further components having free hydroxyl groups are used.

6. The thermoplastic polyamide according to any of claims 1 to 5 obtainable or obtained through the reaction of at least the components (i), (ii), and (iii):
(i) a diisocyanate composition comprising at least MDI;
(ii) a polyester dicarboxylic acid or polyether dicarboxylic acid composition comprising at least HOOC-(CH₂)ₓCOO-PTHF-OOC-(CH₂)_{y}-COOH, where x and y are independently an integer in the range from 1 to 10, preferably in the range from 1 to 5, further preferably in the range 1 to 3, further preferably at least HOOC-(CH₂)₂-COO-PTHF-OOC-(CH₂)₂-COOH;
(iii) a dicarboxylic acid composition comprising at least adipic acid.

7. A process for producing a thermoplastic polyamide, comprising the reaction of at least the following components:
(i) a composition comprising a polymeric compound having two carboxylic acid moieties;
(ii) a dicarboxylic acid composition;
(iii) a diisocyanate composition,
wherein a catalyst having a Lewis base component, selected from the group consisting of N-methylimidazole, melamine, guanidine, cyanuric acid, dicyandiamide, and mixtures thereof, is used in the reaction, wherein the polymeric compound having two carboxylic acid moieties comprises at least HOOC-(CH₂)ₓCOO-PTHF-OOC-(CH₂)_{y}-COOH, where x and y are independently an integer in the range from 1 to 10.

8. The process according to claim 7, wherein the PTHF has a number-average molecular weight Mn in the range from 500 to 3000 g/mol, preferably in the range from 500 to 2000 g/mol, wherein the polymeric compound having two carboxylic acid moieties comprises preferably at least HOOC-(CH₂)ₓCOO-PTHF-OOC-(CH₂)_{y}-COOH, where x and y are independently an integer in the range from 1 to 5, preferably in the range 1 to 3, with the polymeric compound having two carboxylic acid moieties preferably comprising at least HOOC-(CH₂)₂-COO-PTHF-OOC-(CH₂)₂-COOH;
and/or
the dicarboxylic acid composition in accordance with (ii) comprises at least one dicarboxylic acid, preferably selected from the group of C2 to C12 dicarboxylic acids, further preferably selected from the group of C4 to C8 dicarboxylic acids, further preferably at least 1,6-hexanedioic acid (adipic acid);
and/or
the diisocyanate composition in accordance with (iii) comprises at least one diisocyanate selected from the group consisting of 2,2'-diphenylmethane diisocyanate (2,2'-MDI), 2,4'-diphenylmethane diisocyanate (2,4'-MDI), 4,4'-diphenylmethane diisocyanate (4,4'-MDI), hexamethylene 1,6-diisocyanate (HDI), and 4,4'-, 2,4'-, and 2,2'-methylenedicyclohexyl diisocyanate (H12MDI), naphthylene diisocyanate NDI, tolylene diisocyanate (TDI), tolidine diisocyanate (TODI), para-diphenyl diisocyanate (PDI), preferably at least MDI.

9. The process according to claim 7 or 8, wherein no compound having free hydroxyl groups is used in the reaction of (i), (ii), and (iii); preferably none of components (i), (ii), and (iii) contains free hydroxyl groups; further preferably none of components (i), (ii), and (iii) contains free hydroxyl groups and no further components having free hydroxyl groups are used.

10. The process according to any of claims 7 to 9, wherein the reaction of the components (i), (ii), and (iii) takes place in a reactive extruder apparatus comprising at least two, preferably interconnected, extruders, further preferably in a tandem reactive extruder.

11. A thermoplastic polyamide obtained or obtainable by the process according to claim 10.

12. The use of a thermoplastic polyamide according to any of claims 1 to 6 or of a thermoplastic polyamide obtained or obtainable by the process according to any of claims 7 to 10 for the production of a molded body, an injection-molded product, an extrusion product, a film, an extruded foam or a foam article; preferably
for an article selected from the group of tubing, in particular pressure tubing, and cable sheathing; or
for an article selected from the group consisting of footwear soles; footwear sole components, in particular footwear midsoles; items of sports equipment, in particular balls; and damping elements, in particular damping elements for a machine or for an automobile.

## Revendications

1. Polyamide thermoplastique, obtenu ou pouvant être obtenu par la réaction d'au moins les composants (i), (ii) et (iii) :
(i) une composition comprenant un composé polymère contenant deux groupes acide carboxylique ;
(ii) une composition d'acides dicarboxyliques, comprenant au moins un acide dicarboxylique ;
(iii) une composition de diisocyanates comprenant au moins un diisocyanate,
réaction dans laquelle un catalyseur contenant un composant base de Lewis, choisi dans le groupe consistant en le N-méthylimidazole, la mélamine, la guanidine, l'acide cyanurique, le dicyanodiamide et les mélanges de ceux-ci, est utilisé, le composé polymère contenant deux groupes acide carboxylique comprenant au moins HOOC-(CH₂)ₓCOO-PTHF-OOC-(CH₂)_{y}-COOH, x et y représentant indépendamment l'un de l'autre un nombre entier dans la plage de 1 à 10.

2. Polyamide thermoplastique selon la revendication 1, le polytétrahydrofurane (PTHF) présentant une masse moléculaire moyenne en nombre Mn dans la plage de 500 à 3 000 g/mol, de préférence dans la plage de 500 à 2 000 g/mol, le composé polymère contenant deux groupes acide carboxylique comprenant de préférence au moins HOOC-(CH₂)ₓCOO-PTHF-OOC-(CH₂)_{y}-COOH, x et y représentant indépendamment l'un de l'autre un nombre entier dans la plage de 1 à 5, de préférence dans la plage de 1 à 3, le composé polymère contenant deux groupes acide carboxylique comprenant en outre de préférence au moins HOOC-(CH₂)₂-COO-PTHF-OOC-(CH₂)₂-COOH.

3. Polyamide thermoplastique selon la revendication 1 ou 2, la composition d'acides dicarboxyliques selon (ii) comprenant au moins un acide dicarboxylique, de préférence choisi dans le groupe des acides dicarboxyliques en C2 à C12, plus préférentiellement dans le groupe des acides dicarboxyliques en C4 à C8, plus préférentiellement au moins l'acide 1,6-hexanedioïque (acide adipique).

4. Polyamide thermoplastique selon l'une des revendications 1 à 3, la composition de diisocyanates selon (iii) contenant au moins un diisocyanate choisi dans le groupe consistant en le diisocyanate de 2,2'-diphénylméthane (2,2'-MDI), le diisocyanate de 2,4'-diphénylméthane (2,4'-MDI), le diisocyanate de 4,4'-diphénylméthane (4,4'-MDI), le diisocyanato-1,6-hexaméthylène (HDI) et le diisocyanate de 4,4'-, de 2,4'- et de 2,2'-méthylènedicyclohexyle (H12MDI), le diisocyanate de naphtylène NDI, le diisocyanate de toluylène (TDI), le diisocyanate de tolidine (TODI), le diisocyanate de paradiphényle (PDI), de préférence au moins le MDI.

5. Polyamide thermoplastique selon l'une des revendications 1 à 4, aucun composé comportant des groupes hydroxyle libres n'étant utilisé dans la réaction de (i), (ii) et (iii) ; de préférence, aucun des composants (i), (ii) et (iii) ne comprenant des groupes hydroxyle libres ; plus préférentiellement, aucun des composants (i), (ii) et (iii) ne comprenant des groupes hydroxyle libres, et aucun autre composant n'est utilisé, qui contiennent des groupes hydroxyle libres.

6. Polyamide thermoplastique selon l'une des revendications 1 à 5, obtenu ou pouvant être obtenu par la réaction d'au moins les composants (i), (ii) et (iii) :
(i) une composition de diisocyanates comprenant au moins du MDI ;
(ii) une composition d'acides polyester- ou polyétherdicarboxyliques comprenant au moins HOOC-(CH₂)ₓCOO-PTHF-OOC-(CH₂)_{y}-COOH, x et y représentant indépendamment l'un de l'autre un nombre entier dans la plage de 1 à 10, de préférence dans la plage de 1 à 5, plus préférentiellement dans la plage de 1 à 3, plus préférentiellement au moins HOOC-(CH₂)₂-COO-PTHF-OOC-(CH₂)₂-COOH ;
(iii) une composition d'acides dicarboxyliques comprenant au moins de l'acide adipique.

7. Procédé de fabrication d'un polyamide thermoplastique, comprenant la réaction d'au moins l'un des composants suivants :
(i) une composition comprenant un composé polymère contenant deux groupes acide carboxylique ;
(ii) une composition d'acides dicarboxyliques ;
(iii) une composition de diisocyanates,
réaction dans laquelle un catalyseur contenant un composant base de Lewis, choisi dans le groupe consistant en le N-méthylimidazole, la mélamine, la guanidine, l'acide cyanurique, le dicyanodiamide et les mélanges de ceux-ci, est utilisé, le composé polymère contenant deux groupes acide carboxylique comprenant au moins HOOC-(CH₂)ₓCOO-PTHF-OOC-(CH₂)_{y}-COOH, x et y représentant indépendamment l'un de l'autre un nombre entier dans la plage de 1 à 10.

8. Procédé selon la revendication 7, dans lequel le PTHF présente une masse moléculaire moyenne en nombre Mn dans la plage de 500 à 3 000 g/mol, de préférence dans la plage de 500 à 2 000 g/mol, le composé polymère contenant deux groupes acide carboxylique comprenant de préférence au moins HOOC-(CH₂)ₓCOO-PTHF-OOC-(CH₂)_{y}-COOH, x et y représentant indépendamment l'un de l'autre un nombre entier dans la plage de 1 à 5, de préférence dans la plage de 1 à 3, le composé polymère contenant deux groupes acide carboxylique comprenant de préférence au moins HOOC-(CH₂)₂-COO-PTHF-OOC-(CH₂)₂-COOH ;
et/ou
la composition d'acides dicarboxyliques selon (ii) comprend au moins un acide dicarboxylique, de préférence choisi dans le groupe des acides dicarboxyliques en C2 à C12, plus préférentiellement dans le groupe des acides dicarboxyliques en C4 à C8, plus préférentiellement au moins l'acide 1,6-hexanedioïque (acide adipique) ;
et/ou
la composition de diisocyanates selon (iii) contient au moins un diisocyanate choisi dans le groupe consistant en le diisocyanate de 2,2'-diphénylméthane (2,2'-MDI), le diisocyanate de 2,4'-diphénylméthane (2,4'-MDI), le diisocyanate de 4,4'-diphénylméthane (4,4'-MDI), le diisocyanato-1,6-hexaméthylène (HDI) et le diisocyanate de 4,4'-, de 2,4'- et de 2,2'-méthylènedicyclohexyle (H12MDI), le diisocyanate de naphtylène NDI, le diisocyanate de toluylène (TDI), le diisocyanate de tolidine (TODI), le diisocyanate de paradiphényle (PDI), de préférence au moins MDI.

9. Procédé selon la revendication 7 ou 8, dans lequel aucun composé ayant des groupes hydroxyle libres n'est utilisé dans la réaction de (i), (ii) et (iii) ; de préférence, aucun des composants (i), (ii) et (iii) ne comprenant des groupes hydroxyle libres ; plus préférentiellement, aucun des composants (i), (ii) et (iii) ne comprenant des groupes hydroxyle libres, et aucun autre composant n'étant utilisé, qui contiennent des groupes hydroxyle libres.

10. Procédé selon l'une des revendications 7 à 9, la réaction des composants (i), (ii) et (iii) ayant lieu dans un équipement d'extrudeuse réactive comprenant au moins deux extrudeuses interconnectées, plus préférentiellement dans une extrudeuse réactive en tandem.

11. Polyamide thermoplastique obtenu ou pouvant être obtenu par le procédé selon la revendication 10.

12. Utilisation d'un polyamide thermoplastique selon l'une des revendications 1 à 6 ou d'un polyamide thermoplastique obtenu ou pouvant être obtenu par le procédé selon l'une des revendications 7 à 10 pour la fabrication d'un objet moulé, d'un produit moulé par injection, d'un produit extrudé, d'une feuille, d'une mousse extrudée ou d'un article en mousse ; de préférence pour un article choisi dans le groupe consistant en un tuyau flexible, en particulier un tuyau flexible sous pression et une gaine de câble ; ou pour un article choisi dans le groupe consistant en une semelle de chaussure ; un constituant d'une semelle de chaussure ; en particulier un intercalaire ; un élément d'équipement sportif, en particulier un ballon ; et un élément d'amortissement, en particulier un élément d'amortissement pour une machine ou une automobile.
